# EUROPEAN PATENT SPECIFICATION

(11) **EP 3 240 160 B1**
(45) Date of publication and mention of the grant of the patent: **26.05.2021**
(21) Application number: 17167296.7
(22) Date of filing: 20.04.2017
(51) Int. Cl.: H02K 15/02, H02K 15/12, B21D 28/02

(54) **METHOD OF PRODUCING LAMINATION STACKS**
VERFAHREN ZUM HERSTELLEN VON BLECHPAKETEN
MÉTHODE DE FABRICATION DES PAQUETS DE TÔLES

(30) Priority: 26.04.2016 IT UA20162895
(43) Date of publication of application: 01.11.2017
(73) Proprietor: STE.MA. S.R.L., 24040 Ciserano (BG) (IT)
(72) Inventor: ADOBATI, Andrea, 24055 COLOGNO AL SERIO (BG) (IT); PEREGO, Mirco, 20885 RONCO BRIANTINO (MB) (IT)
(74) Representative: Gatti, Enrico

(56) References cited:
- WO-A1-2011/076321
- JP-A- 2004 064 041
- US-A1- 2015 097 463

## Description

The present invention relates to a method for producing lamination stacks, in particular made up of core laminations for applications on electric motors and any electrical machine in general. It moreover relates to a device for the production of lamination stacks.

Typically, to produce the lamination stacks a press for blanking the individual laminations is used.

The union of the laminations to form the stack may be obtained with different techniques, such as riveting, clinching, welding, diecasting, and gluing.

In particular, the use of glues to produce the lamination stacks appears to be an interesting technique, but it risks soiling the press, the die or the stacks themselves, thus ruining them or causing machine interruptions to restore the initial conditions.

The document WO2011/076321 discloses a device for the production of lamination stacks comprising a press with a punch and a workpiece carrier wherein the laminations are collected and having laterally a glue dispenser. Similar devices are disclosed in JP 2004 064041 A and US 2015/097463 A1.

The aim of the present invention is to provide a method for producing lamination stacks that will overcome the drawbacks of the prior art.

Another aim is to provide a method for producing lamination stacks that will be simple to implement.

A further aim is to provide a method for producing lamination stacks that will be efficient and will enable a high production rate.

According to the present invention, the above aims and others are still achieved by a method for producing lamination stacks according to claim 1.

The above aims are moreover achieved by a device for the production of lamination stacks according to claim 5.

Further characteristics of the invention are described in the dependent claims.

The advantages of this solution as compared to the solutions of the prior art are numerous.

- The glue is deposited on the lamination already blanked in a dedicated station of the die. The glue can be deposited by contact or can be sprayed via a specific nozzle, or may also be applied via a roller, paintbrush, or some other means that is brought into contact with the stack itself.

The glue may be applied on the various contours of the lamination and on other particular areas purposely provided for applying the adhesive.

Thanks to the present invention there is no contamination of glue in the die. Moreover, the glue is not polluted by elements present in the die, such as residue of sheet metal or the like. In fact, the application step of the adhesive is carried out outside the blanking station.

The adhesive also constitutes, on account of the method with which it is applied, a barrier against corrosion of the stack itself.

Insulation of the stack itself is improved because it is not polluted by blanking swarf.

Sealing of the stack is improved for all those applications in which a high protection against contamination by dust present in the atmosphere also becomes necessary.

Magnetic insulation of the stack in regard to the windings is improved.

When the press drops, it blanks a lamination and at the same time glues the lamination that has been previously blanked and moved to one side, and thus presents a very high production rate.

The method for producing lamination stacks according to the present invention can be applied to all types of blanking, such as blanking of the lamination from the-full metal plate downwards and blanking of the lamination from the full metal plate upwards, with a repositioning and expulsion of the lamination upwards or downwards.

The characteristics and advantages of the present invention will emerge clearly from the ensuing detailed description of a practical embodiment thereof, illustrated by way of non-limiting example in the annexed drawings, wherein:

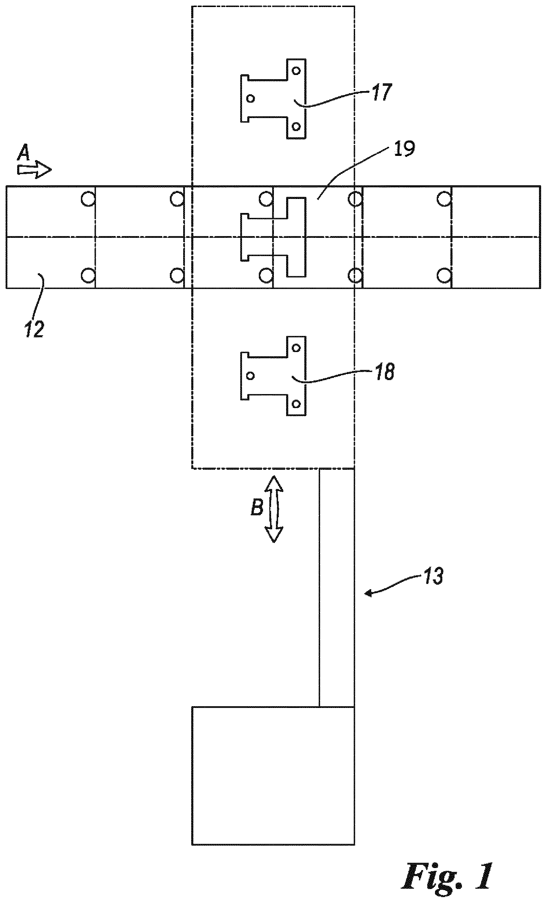

Figure 1 is a schematic illustration of a device for the production of lamination stacks, in top plan view, according to the present invention;
Figure 2 shows a device for the production of lamination stacks, in a first step of production, according to the present invention;
Figure 3 shows a device for the production of lamination stacks, in a second step of production, according to the present invention;
Figure 4 shows a device for the production of lamination stacks, in a third step of production, according to the present invention;
Figure 5 shows a device for the production of lamination stacks, in a fourth step of production, according to the present invention;
Figure 6 shows a device for the production of lamination stacks, in a fifth step of production, according to the present invention;
Figure 7 shows a device for the production of lamination stacks, in a sixth step of production, according to the present invention;
Figure 8 shows a device for the production of lamination stacks, in a seventh step of production, according to the present invention; and

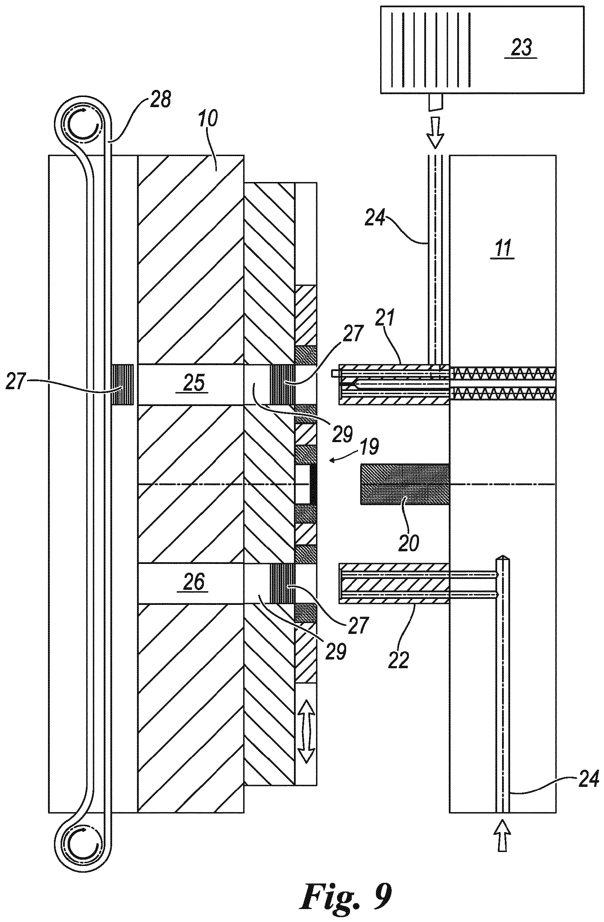

Figure 9 shows a device for the production of lamination stacks, in lateral view, according to the present invention.

With reference to the attached figures, a device for the production of lamination stacks according to the present invention comprises a base 10 and a press 11.

A metal strip 12 passes over the base 10 and under the press 11.

The metal strip 12 advances progressively respecting the rate imposed by the press 11 and by the supply system connected thereto.

In particular, the metal strip 12 arrives and moves in the direction of the arrow A.

The profile of the lamination represented in the figures is provided merely for purposes of explanation and may have any shape.

The base 10 comprises a structure 13 set in a direction transverse to the feed direction of the metal strip 12.

The structure 13 is motor-driven with a motor 14, which has a pinion 15 that meshes with a rack 16, which moves two templates 17 and 18 in a direction transverse to the direction B.

As an alternative to the pinion and rack, the movement may be achieved by means of a piston or a belt or other means. The number of the templates is preferably two, but may be different according to the needs.

The press 11 comprises at the centre a punch 20 and alongside the latter two glue dispensers 21 and 22. It moreover comprises a reservoir 23 for the glue, which supplies the glue to the dispensers 21 and 22 via a tube 24.

Located underneath the punch 20 is the blanking station 19, where the metal strip 12 to be blanked is positioned.

In the base 10, present in positions corresponding to the two glue dispensers 21 and 22, are two respective slots 25 and 26 for collection of the laminations and formation of the lamination stack 27. In particular, these are two through holes made in the base 10, which include a containment brake 29 that enables grouping together of a desired number of laminations during gluing. The containment brake 29 is preferably a lateral detent that can be moved on command.

In an alternative embodiment, the press 11 may comprise just one glue dispenser and consequently just one slot.

Located underneath the base 10 is a conveyor belt 28 or, alternatively, an appropriately designed stack-expulsion system, which collects the lamination stacks 27 coming from the slots 25 and 26, once the stacks have been released from the containment brake 29, and sends them on for storage.

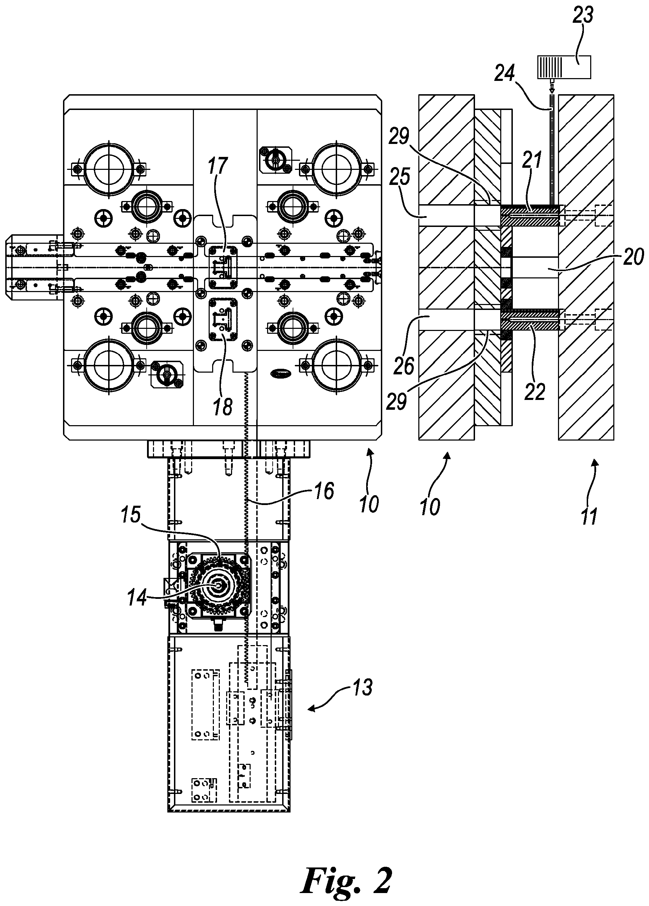

In the first step represented in Figure 2, the template 17 is located under the punch 20, which is brought down by the press 11 to bottom dead centre (180°), and the metal strip 12 is blanked and remains in the template 17, whereas the template 18 is empty. The motor 14 that drives translation of the structure 13 is stationary to guarantee alignment between the punch 20 and the template 17.

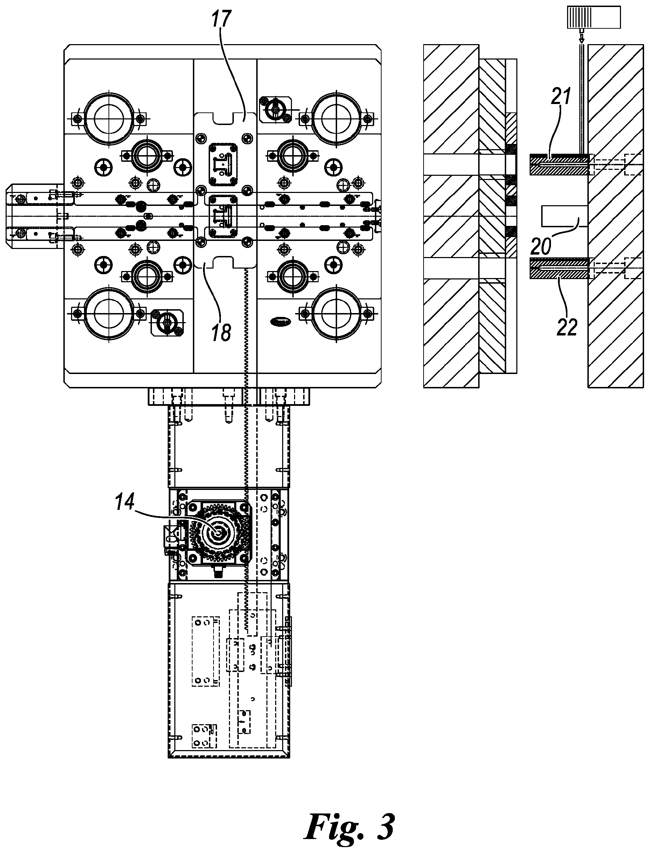

In the second step represented in Figure 3, the press 11 moves into the top dead centre (360°). The motor 14 that displaces the template 17 is driven, with the lamination that has been cut, outside the range of the punch 20 and is positioned above the slot 25.

Simultaneously, the template 18 now comes to be under the punch 20.

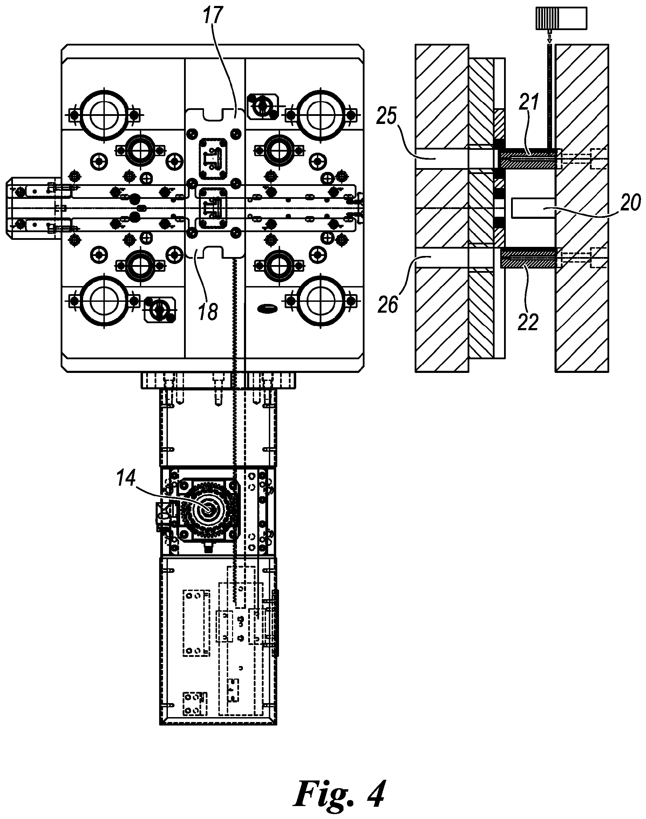

In the third step represented in Figure 4, the metal strip 12 has advanced and is blocked in the blanking position above the template 18, and the press is in an intermediate position (135°) and is dropping to blank the metal strip 12.

In the meantime, the system that delivers the glue from the reservoir 23 activates the sensors to enable the glue dispenser 21 to spray the area envisaged of the lamination that is in the template 17 above the slot 25.

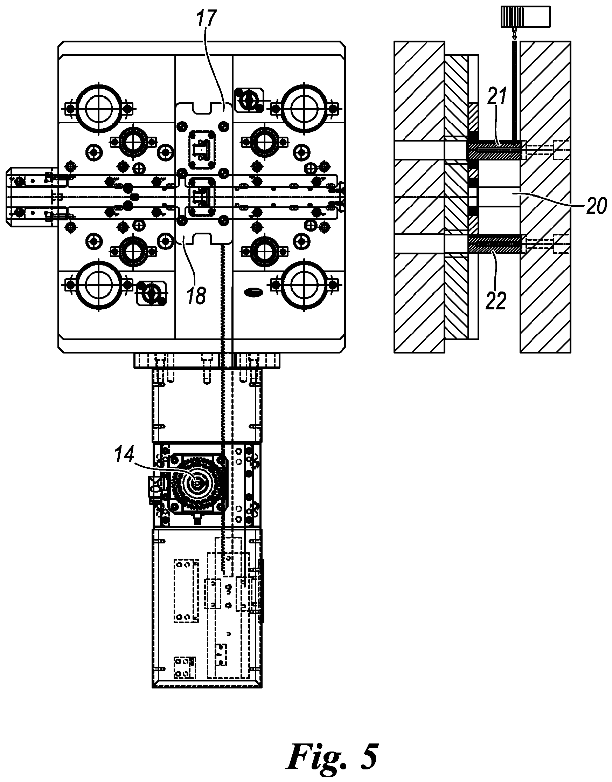

In the fourth step represented in Figure 5, the press has reached bottom dead centre (180°), and the punch 20 has dropped to blank the metal strip 12 that is in the template 18.

At this point, the glue dispenser 21 has appropriately sprayed the area envisaged for adhesion of the lamination that is in the template 17.

Then, in this step, blanking of the metal strip 12 in the blanking station and spraying of glue into the slot 25 is simultaneously performed.

The expellers of the press, activated by the pneumatic cylinder or by an appropriate mechanical servo system, go into action to expel the blanked lamination that is located in the template 17.

The motor 14 for performing translation is still stationary.

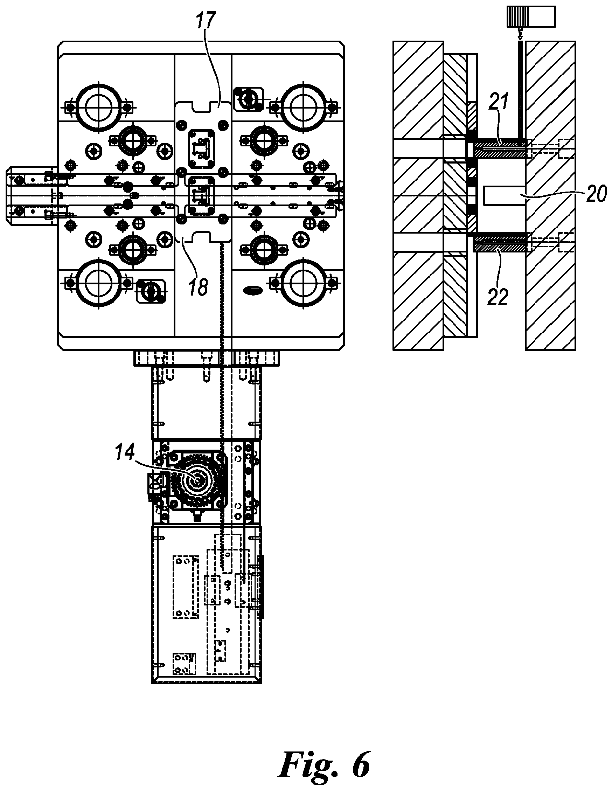

In the fifth step represented in Figure 6, the glue dispenser 21 is deactivated. The press is ascending (225°), and the expellers push the lamination underneath the template 17 that is translating into the tank of the lamination stacks set in the slot 25 beneath the sliding plane of the templates.

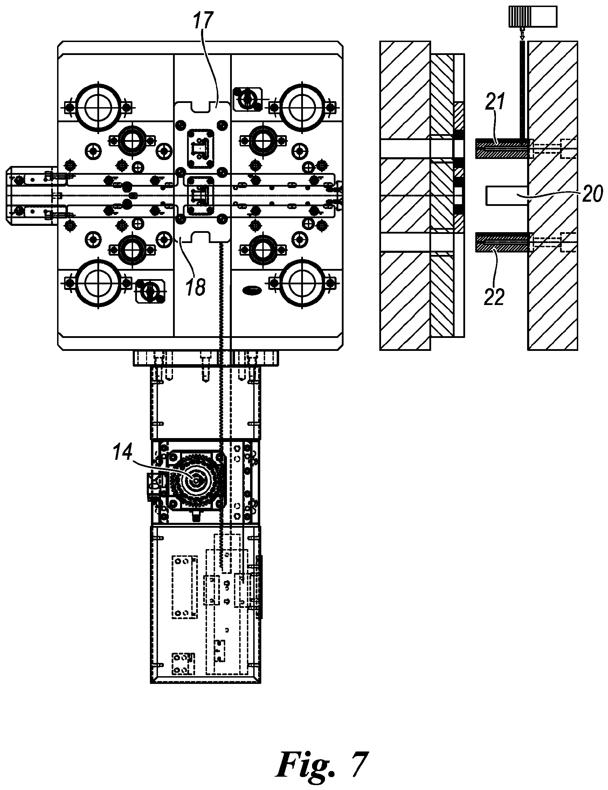

In the sixth step represented in Figure 7, the press is ascending (315°), the expellers have positioned the blanked lamination in the tank of the lamination stacks, the punches for blanking and expulsion are out of the templates, and the motor 14 for translation can start its reverse travel.

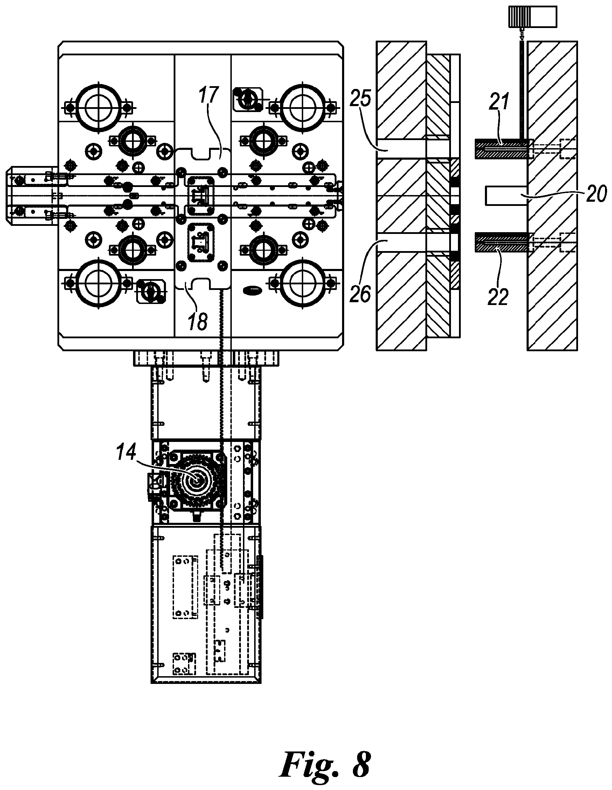

In the seventh step represented in Figure 8, the motor 14 for translation has positioned the template 18 with the blanked lamination inside it in the position of expulsion above the slot 26.

The template 17 is located in the blanking area, and the metal strip 12 is made to advance and is blocked for a new blanking operation, while the press is dropping (315°).

In the meantime, the system that delivers the glue from the reservoir 23 activates the sensors for enabling the glue dispenser 22 to spray the area of the lamination that is located in the template 18 above the slot 26.

Next, a new lamination is blanked in the template 17 and, in the meantime, the glue is sprayed on the lamination set in the template 18, as described previously for the homologous case. The expellers of the press, activated by the pneumatic cylinder or by an appropriate mechanical servo system, go into action to expel the blanked lamination that is located in the template 18 above the slot 26 and position it in the tank of the lamination stacks set beneath the sliding plane of the templates.

The cycle is repeated until the desired lamination-stack height is reached, the conveyor belt 28 collects the complete lamination stacks for subsequent handling, and the cycle is repeated.

The conveyor belt is synchronised with the system for emptying the die and drops the complete stack just received from the containment brake. Said emptying system may envisage a solidification chamber for enabling complete homogenisation of the stack and the necessary cohesion required by the possible adhesive.

Two distinct lamination stacks are thus obtained, alongside the punch 20.

There may also be envisaged a number of areas for collection of the stacks by providing a number of templates moved always in a direction (B) transverse to the feed direction (A) of the metal strip 12.

It is hence possible to blank the metal strip 12 in a blanking station, displace the blanked lamination into a gluing station external to (i.e., alongside) the blanking station, spray the glue, and set it in an area for collection and formation of the lamination stacks.

In this way, the blanking station is not soiled with the glue.

As an alternative, the glue may be applied on the stack preassembled on a purposely provided surface possibly by capillarity in an expressly designed chamber, with possible application of a vacuum or suction pressure in the die or at outlet therefrom or possibly in a subsequent step.

The glue may also be applied on a stack obtained using the technology for producing alternators that in the sector of motor manufacture is referred to as "slinky", in a step subsequent to rollingup, within a specific chamber.

Drying or activation of the glue may be obtained by means of a flow of possibly hot air or in water at any temperature.

In the step of gluing of the outside of the pack there could be added other elements such as shafts, permanent magnets, flanges, or other members that constitute the electric motor, or other similar items.

The materials used for the device, the press, etc., as well as the dimensions, may be any according to the needs and the state of the art.

## Claims

1. A method for producing lamination stacks comprising the steps of: pushing a metal strip (12) into a blanking station (19); and blanking said metal strip (12) in said blanking station (19) to produce a first blanked lamination by means of a press (11); moving said first blanked lamination in a direction transverse to the direction of supply of said metal strip (12) into a gluing station (25, 26), outside said blanking station (19); pushing said metal strip (12) into said blanking station (19); and setting said first lamination in an area (27) for collection and formation of lamination stacks; said method being **characterized in that** it comprises the steps of blanking said metal strip (12) in said blanking station (19) to produce a second blanked lamination and simultaneously spraying the glue on at least one area provided on said first blanked lamination; using said press (11) that comprises at the centre a punch (20) and alongside the latter two glue dispensers (21) and (22); locating underneath the punch (20) the blanking station (19), where the metal strip (12) to be blanked" is positioned; positioning corresponding to the two glue dispensers (21) and (22), two respective slots (25) and (26) for collection of the laminations and formation of the lamination stack (27).

2. The method according to Claim 1, wherein the step of blanking of said metal strip (12) is performed by means of a punch (20) and a template (17, 18).

3. The method according to any one of the preceding claims, wherein the step of blanking of said metal strip (12) comprises the step of bringing down a press (11), where said press (11) comprises a punch (20) and alongside the latter at least one glue dispenser (21, 22).

4. The method according to any one of the preceding claims, wherein said step of setting said first lamination in an area for collection and formation of lamination stacks comprises the step of expelling the lamination stack (27) on a conveyor belt (28) set underneath said area of collection and formation of lamination stacks.

5. A device for the production of lamination stacks comprising: means for supplying a metal strip (12) to a blanking station (19); a press (11) comprising at the centre a punch (20) and alongside the latter two glue dispenser (21, 22); two templates (17, 18) to enable blanking of said metal strip (12) in the desired shape; and means (13) for displacing one of said two template (17, 18) in a direction transverse to the direction of supply of said metal strip (12) from said blanking station (19) to a gluing station (25, 26); wherein present in a position corresponding to said two glue dispenser (21, 22) are two respective slots (25, 26) for collection of the laminations and formation of the lamination stack (27), and wherein a conveyor belt (28), set underneath said two slots (25, 26), collects the lamination stacks (27) and sends them on for storage.

6. The device according to the preceding claim, wherein the device comprises a base (10) on which said at least one template (17, 18) slides.

7. The device according to the preceding claim, wherein said base (10) comprises said collection slot (25, 26) positioned in said at least one glue dispenser (21, 22).

8. The device according to the preceding claim, wherein said collection slot (25, 26) comprises a through hole within said base (10).

9. The device according to any one of the claims 5-8, wherein said means (13) for displacing said at least one template (17, 18) comprise a motor-driven structure with a motor (14) having a pinion (15) that meshes with a rack (16).

10. The device according to any one of the claims 5-9, wherein said press comprises a punch (20) and two glue dispensers (21, 22) set alongside said punch (20), one on each side.

## Patentansprüche

1. Ein Verfahren zur Herstellung von Laminatstapeln, das folgende Schritte umfasst: das Schieben eines Metallstreifens (12) in eine Stanzstation (19); und das Stanzen des genannten Metallstreifens (12) in der genannten Stanzstation (19), um mit Hilfe einer Presse (11) ein erstes gestanztes Laminat herzustellen; den Transport des genannten ersten gestanzten Laminats in Querrichtung zur Zufuhrrichtung des genannten Metallstreifens (12) in eine Klebestation (25, 26) außerhalb der genannten Stanzstation (19); das Schieben des genannten Metallstreifens (12) in die genannte Stanzstation (19); und die Einführung des genannten ersten Laminats in einen Bereich (27) zur Sammlung und Bildung von Laminatstapeln; wobei das genannte Verfahren **dadurch gekennzeichnet** wird, dass es jeweils die Schritte des Stanzens des genannten Metallstreifens (12) in der genannten Stanzstation (19) umfasst, um ein zweites gestanztes Laminat herzustellen und gleichzeitig den Klebstoff auf mindestens einen Bereich aufzusprühen, welcher sich auf dem genannten ersten gestanzten Laminat befindet; wobei die genannte Presse (11) verwendet wird, die in der Mitte eine Stanze (20) umfasst, sowie entlang der letzteren jeweils zwei Klebstoffspender (21) und (22); und die Anordnung der Stanzstation (19) unterhalb der Stanze (20), wo sich der jeweils zu stanzende Metallstreifen (12) befindet; die Anordnung zwei entsprechender Schlitze (25) und (26) an den dazugehörigen beiden Klebstoffspendern (21) und (22) zur Sammlung der Laminate und Bildung des Laminatstapels (27).

2. Das Verfahren gemäß Anspruch 1, wobei der Schritt des Stanzens des genannten Metallstreifens (12) mit Hilfe einer entsprechenden Stanze (20) und eine Schablone (17, 18) erfolgt.

3. Das Verfahren gemäß einem beliebigen der vorausgegangenen Ansprüche, wobei der Schritt des Stanzens des genannten Metallstreifens (12) den Schritt des Herunterfahrens einer Presse (11) umfasst, wobei die genannte Presse (11) jeweils eine Stanze (20) und entlang letzterer mindestens einen Klebstoffspender (21, 22) umfasst.

4. Das Verfahren gemäß einem beliebigen der vorausgegangenen Ansprüche, wobei der genannte Schritt der Anordnung des genannten ersten Laminats in einem Bereich zur Sammlung und Bildung entsprechender Laminatstapel jeweils den Schritt des Auswurfs des Laminatstapels (27) auf ein Förderband (28) umfasst, welches sich unterhalb des genannten Bereichs zur Sammlung und Bildung von Laminatstapeln befindet.

5. Eine Vorrichtung zur Herstellung von Laminatstapeln, welche Folgendes umfasst: entsprechende Elemente für die Zufuhr eines Metallstreifens (12) zu einer Stanzstation (19) ; eine Presse (11), welche in der Mitte eine Stanze (20) und entlang der letzteren jeweils zwei Klebstoffspender (21, 22) umfasst; zwei Schablonen (17, 18), um das Stanzen des genannten Metallstreifens (12) in der gewünschten Form zu ermöglichen; sowie Elemente (13) zur Verschiebung einer der genannten beiden Schablonen (17, 18) in Querrichtung zur Zufuhrrichtung des genannten Metallstreifens (12), und zwar von der genannten Stanzstation (19) zu einer Klebestation (25, 26); wobei sich in einer Stellung, welche den genannten beiden Klebstoffspendern (21, 22) entspricht, jeweils zwei entsprechende Schlitze (25, 26) zur Sammlung der Laminate und Bildung des Laminatstapels (27) befinden, und wobei ein Förderband (28), das unterhalb der genannten zwei Schlitze (25, 26) angeordnet ist, die Laminatstapel (27) jeweils einsammelt und sie zur Lagerung weiterschickt.

6. Die Vorrichtung gemäß dem vorausgegangenen Anspruch, wobei die Vorrichtung eine Basis (10) umfasst, über die die genannte mindestens eine Schablone (17, 18) gleiten kann.

7. Die Vorrichtung gemäß dem vorausgegangenen Anspruch, wobei die genannte Basis (10) den genannten Sammelschlitz (25, 26) umfasst, welcher an dem genannten mindestens einen Klebstoffspender (21, 22) angeordnet ist.

8. Die Vorrichtung gemäß dem vorausgegangenen Anspruch, wobei der genannte Sammelschlitz (25, 26) eine durchgehende Öffnung innerhalb der genannten Basis (10) umfasst.

9. Die Vorrichtung gemäß einem beliebigen der Ansprüche von 5 bis 8, wobei die genannten Elemente (13) zur Verschiebung der genannten mindestens einen Schablone (17, 18) jeweils eine motorbetriebene Konstruktion mit einem Motor (14) umfassen, welche ein Ritzel (15) aufweist, das in eine entsprechende Zahnstange (16) eingreift.

10. Die Vorrichtung gemäß einem beliebigen der Ansprüche von 5 bis 9, wobei die genannte Presse jeweils eine Stanze (20) und zwei Klebstoffspender (21, 22) umfasst, welche entlang der genannten Stanze (20) angeordnet sind, und zwar an jeder Seite einer.

## Revendications

1. Procédé de fabrication des paquets de tôles comprenant les étapes consistant à : pousser une bande métallique (12) dans une station de découpage (19); et découper ladite bande métallique (12) dans ladite station de découpage (19) pour fabriquer une première tôle découpée au moyen d'une presse (11); déplacer ladite première tôle découpée dans une direction transversale à la direction d'alimentation de ladite bande métallique (12) dans une station d'encollage (25, 26), en dehors de la station de découpage (19); pousser ladite bande métallique (12) dans ladite station de découpage (19); et placer ladite première tôle dans une zone (27) de collecte et de formation de paquets de tôles; ledit procédé étant **caractérisé en ce qu'**il comprend les étapes consistant à découper ladite bande métallique (12) dans ladite station de découpage (19) pour fabriquer une seconde tôle découpée et simultanément pulvériser la colle sur au moins une zone prévue sur ladite première tôle découpée; utiliser ladite presse (11) qui comprend au centre un poinçon (20) et le long de ce dernier deux distributeurs de colle (21) et (22); localiser en dessous du poinçon (20) la station de découpage (19), où la bande métallique (12) à découper est positionnée ; positionner en correspondance avec les deux distributeurs de colle (21) et (22), deux fentes respectives (25) et (26) pour collecter les tôles et former le paquet de tôles (27).

2. Procédé selon la revendication 1, où l'étape de découpage de ladite bande métallique (12) est réalisée au moyen d'un poinçon (20) et d'un modèle (17, 18).

3. Procédé selon l'une quelconque des revendications précédentes, où l'étape de découpage de ladite bande métallique (12) comprend l'étape de faire baisser une presse (11) où ladite presse (11) comprend un poinçon (20) et le long de ce dernier au moins un distributeur de colle (21, 22).

4. Procédé selon l'une quelconque des revendications précédentes, où ladite étape de placer ladite première tôle dans une zone de collecte et de formation de paquets de tôles comprend l'étape d'expulsion du paquet de tôles (27) sur une bande transporteuse (28) placée en dessous de ladite zone de collecte et de formation de paquets de tôles.

5. Dispositif de fabrication de paquets de tôles comprenant: moyens pour alimenter une bande métallique (12) à une station de découpage (19); une presse (11) comprenant au centre un poinçon (20) et le long de ce dernier deux distributeurs de colle (21, 22); deux modèles (17, 18) pour permettre le découpage de ladite bande métallique (12) dans la forme souhaitée; et moyens (13) pour déplacer un desdits deux modèles (17, 18) dans une direction transversale à la direction d'alimentation de ladite bande métallique (12) à partir de ladite station de découpage (19) à une station d'encollage (25, 26) ; où dans une position correspondante auxdits deux distributeurs de colle (21, 22) sont présentes deux fentes respectives (25, 26) pour collecter les tôles et former le paquet de tôles (27), et où une bande transporteuse (28), placée en dessous desdites deux fentes (25, 26), collecte les paquets de tôles (27) et les envoie pour le stockage.

6. Dispositif selon la revendication précédente, où le dispositif comprend une base (10) sur laquelle ledit au moins un modèle (17, 18) coulisse.

7. Dispositif selon la revendication précédente, où ladite base (10) comprend ladite fente de collecte (25, 26) positionnée dans ledit au moins un distributeur de colle (21, 22).

8. Dispositif selon la revendication précédente, où ladite fente de collecte (25, 26) comprend un trou traversant à l'intérieur de ladite base (10).

9. Dispositif selon l'une quelconque des revendications 5 à 8, où lesdits moyens (13) pour déplacer ledit au moins un modèle (17, 18) comprennent une structure motorisée avec un moteur (14) ayant un pignon (15) qui s'engrène avec une crémaillère (16).

10. Dispositif selon l'une quelconque des revendications 5 à 9, où ladite presse comprend un poinçon (20) et deux distributeurs de colle (21, 22) placés le long dudit poinçon (20), un sur chaque côté.
